# EUROPEAN PATENT APPLICATION

(11) **EP 2 273 844 A1**
(43) Date of publication of application: **12.01.2011**
(21) Application number: 10166998.4
(22) Date of filing: 23.06.2010
(51) Int. Cl.: H04W 80/02

(54) **Packet data transmitting/receiving apparatus using two sublayers**

(30) Priority: 23.06.2009 KR 20090055891
(71) Applicant: Electronics and Telecommunications Research Institute, Daejeon 305-700 (KR)
(72) Inventor: Park, Hyun Seo, Daejeon 305-700 (KR); Song, Pyeong Jung, Daejeon 305-700 (KR); Shin, Jae Sheung, Daejeon 305-700 (KR); Kim, Kyung Sook, Daejeon 305-700 (KR); KIM, Chang Ki, Daejeon 305-700 (KR); Shin, Yeon Seung, Daejeon 305-700 (KR)
(74) Representative: Betten & Resch

(57) **Abstract**

Provided is an apparatus and method for transmitting and receiving packet data using two sublayers. An apparatus for transmitting packet data using two sublayers, may include: at least one Packet Data Convergence Protocol PDCP layer (110) to compress a header of an Internet Protocol IP packet, to generate a PDCP packet data unit based on the IP packet, and to reconfigure the PDCP packet data unit to be a scheduled size; and a Media Access Control MAC layer (120) being connected to the at least one PDCP layer to multiplex the PDCP packet data unit to an MAC packet data unit, to de-multiplex the MAC packet data unit to the PDCP packet data unit, and to transmit and receive the MAC packet data unit by performing a Hybrid Automatic Repeat Request HARQ.

## Description

### BACKGROUND

### 1. Field of the Invention

The present invention relates to a method and apparatus for transmitting packet data using two sublayers, and more particularly, to a method and apparatus for transmitting and receiving packet data that may integrate a plurality of sublayers into two sublayers and thereby reduce costs used for constructing a terminal and a base station.

### 2. Description of the Related Art

In a 3^{rd} Generation Partnership Project (3GPP) Long Term Evolution (LTE), a terminal and base station layer (Layer 2) includes three sublayers, for example, a Packet Data Convergence Protocol (PDCP) sublayer, a Radio Link Control (RLC) sublayer, and a Media Access Control (MAC) sublayer.

However, since similar functions overlap in each of the sublayers, unnecessary hardware resources may be used and a structure may become complex.

For example, since the PDCP sublayer and the RLC sublayer manage different sequence numbers and include partially overlapping functions among functions to reconfigure a packet data unit, the PDCP sublayer and the RLC sublayer may have a complex structure.

Also, the PDCP sublayer and the RLC sublayer manage different buffers and thus there is a waste of memory. An RLC Automatic Repeat Request (ARQ) may complement an MAC Hybrid Automatic Repeat Request (HARQ). Therefore, in comparison to a gain obtained by separately operating the MAC HARQ and an ARQ of a higher transmission layer, a complexity may increase.

Accordingly, there is a need for a system and a method that may reduce a complexity due to overlapping and unnecessary configurations, and that may also prevent a redundant use of hardware.

### SUMMARY

An aspect of the present invention provides a method and apparatus for transmitting and receiving packet data that may take over functions of Radio Link Control (RLC) sublayers using a Packet Data Convergence Protocol (PDCP) sublayer and a Media Access Control (MAC) sublayer to thereby reduce a number of sublayers to two sublayers, and may also reduce costs used for constructing a terminal and a base station.

Another aspect of the present invention also provides a method and apparatus for transmitting and receiving packet data that may include Hybrid Automatic Repeat Request (HARQ) ACK/NACK feedback information, in an MAC packet data unit and transmit the MAC packet data unit to thereby eliminate an HARQ ACK/NACK error, and to guarantee a reliability even without using an ARQ.

Another aspect of the present invention also provides a method and apparatus for transmitting and receiving packet data that may change a maximum number of HARQ transmissions based on a radio link state of a terminal and thereby satisfy requirements for an HARQ performance in real time.

According to an aspect of the present invention, there is provided an apparatus for transmitting packet data using two sublayers, the apparatus including: at least one PDCP layer to compress a header of an Internee Protocol (IP) packet, to generate a PDCP packet data unit based on the IP packet, and to reconfigure the PDCP packet data unit to be a scheduled size; and an MAC layer being connected to the at least one PDCP layer to multiplex the PDCP packet data unit to an MAC packet data unit, to de-multiplex the MAC packet data unit to the PDCP packet data unit, and to transmit and receive the MAC packet data unit by performing an HARQ.

According to another aspect of the present invention, there is provided an apparatus for receiving packet data using two sublayers, the apparatus including: an MAC layer to transmit and receive an MAC packet data unit to and from a transmission apparatus by performing an HARQ, to de-multiplex the MAC packet data unit to a PDCP packet data units, and to multiplex the PDCP packet data unit to the MAC packet data unit; and a PREP layer to reconfigure the PDCP packet data unit based on information included in the PDCP packet data unit, and to restore an IP packet and a header of the IP packet based on the reconfigured PDCP packet data unit.

### EFFECT

According to embodiments of the present invention, it is possible to take over functions of Radio Link Control (RLC) sublayers using a Packet Data Convergence Protocol (PDCP) sublayers and a Media Access Control (MAC) sublayer, and to thereby reduce a number of sublayers to two sublayers, and to reduce costs used for constructing a terminal and a base station.

Also, according to embodiments of the present invention, it is possible to include Hybrid Automatic Repeat Request (HART) ACK/NACK feedback information in an MAC packet data unit and transmit the MAC packet data unit, and to thereby eliminate an HARQ ACK/NACK error, and to guarantee a reliability even without using an ARQ.

Also, according to embodiments of the present invention, it is possible to change a maximum number of HARQ transmissions based on a radio link state of a terminal and to thereby satisfy requirements for an HARQ performance in real time.

### BRIEF DESCRIPTION OF THE DRAWINGS

These and/or other aspects, Matures, and advantages of the invention will become apparent and more readily appreciated from the following description of exemplary embodiments, taken in conjunction with the accompanying drawings of which:
FIG. 1 is a diagram illustrating a configuration of an apparatus for network side using two sublayers according to an embodiment of the present invention:
FIG. 2 is a diagram illustrating a configuration of an apparatus for terminal side using two sublayers according to an embodiment of the present invention:
FIG. 3 is a flowchart illustrating a method of transmitting and receiving packet data using two sublayers according to an embodiment of the present invention:
FIG. 4 is a flowchart illustrating a method of transmitting and receiving packet data using two sublayers according to another embodiment of the present invention with status polling mechanism: and
FIG. 5 is a flowchart illustrating a method of transmitting and receiving packet data using two sublayers according to still another embodiment of the present invention with accumulative status polling mechanism.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

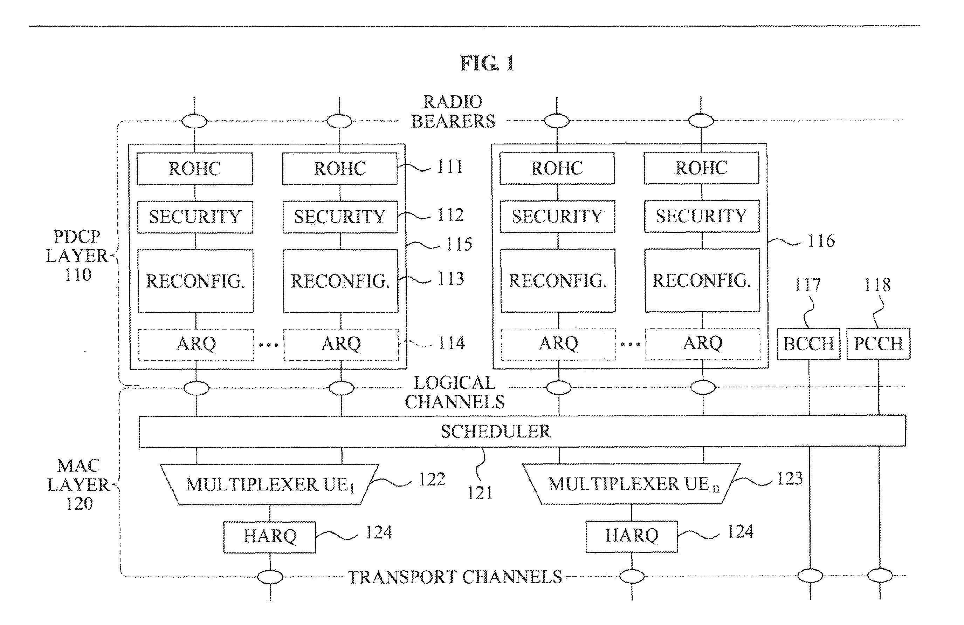

FIG. 1 is a diagram illustrating a configuration of an apparatus for network side using two sublayers according to an embodiment of the present invention.

Referring to FIG. A. the packet data transmission apparatus using the two sublayers according to an embodiment of the present invention may include a Packet Data Convergence Protocol (PDCP) layer 110 and a Media Access Control (MAC) layer 120.

The PDCP layer 110 may include Robust Header Compression (ROHC) units 111, security units 112, and reconfiguration units 113 that are grouped for each reception apparatus.

For example, when the transmission apparatus is a base station and the reception apparatus is a mobile terminal serviceable at the base station, a number of the groups 115 and 116 may correspond to a number of mobile terminals serviceable at the base station.

The ROHC unit 111 may compress a header of an Internet Protocol (IP) packet and generate a PDCP packet data unit based on the IP packet. The ROHC unit 111 may restore the IP packet and the header of the IP packet based on the PDCP packet data unit.

The security unit 112 may perform a security process so that information contained in the PDCP packet data unit may not be exposed. For example, the security unit 12 may encrypt the PDCP packet data unit.

The reconfiguration unit 113 may reconfigure the PDCP packet data unit to be a scheduled size. For example, since the PDCP packet data unit generated by the ROHC unit 111 has various sizes based on the IP packet, the reconfiguration unit 113 may reconfigure the PDCP packet data unit to be a size suitable for a transmission.

In this instance, the reconfiguration unit 113 may reconfigure the PDCP packet data unit to be the size suitable for the transmission using a segmentation, a concatenation, a reassembly, an in-sequence delivery, a duplicate search, and a Service Data Unit (SDU) discard.

The PDCP layer 110 may further include an Automatic Repeat Request (ARQ) unit 114 being connected to the reconfiguration unit 13.

When the ARQ unit 114 requests the reception apparatus to accumulate a Hybrid Automatic Repeat Request (HARQ) result, the ARQ unit 114 may include a PDCP sequence number in the PDCP packet unit and transmit the PDCP packet unit. When a NACK sequence number with respect to the PDCP sequence number is included in the PDCP packet data unit transmitted from the MAC layer 120, the HARQ unit 114 may retransmit the PDCP packet data unit corresponding to the NACK sequence number to the MAC layer 120.

The BCCH unit 1 may generate a channel for transmitting and receiving a broadcast control signal.

The PCCH unit 118 may generate a channel for transmitting and receiving a downlink control signal.

The MAC layer 120 may include a scheduler 121, multiplexers (UE1 and UEn) 122 and 123, and HARQ units 124.

The scheduler 121 may be connected to the groups 115 and 116 to perform scheduling for information transmission between the groups 115 and 116, and the multiplexers (UE1 and UEn) 122 and 123. Also, the scheduler 121 may perform priority handling for the information transmission between the groups 115 and 116, and the multiplexers (UE1 and DEn) 122 and 123.

The multiplexers (UE1 and UEn) 122 and 123 correspond to the groups 115 and 116, respectively. Each of the multiplexers (UE1 and UEn) 122 and 123 may multiplex the PDCP packet data unit transmitted from the reconfiguration unit 113 or the ARQ unit 114 of a corresponding group 115 or 116, and transmit the multiplexed PDCP packet data unit. Also, each of the multiplexers (UE1 and UEn) 122 and 123 may de-multiplex, to the PDCP packet data unit, the MAC packet data unit received by an HARQ unit 124, and transmit the de-multiplexed PDCP packet data unit to the corresponding group 115 or 116.

The HARQ unit 124 may transmit and receive the MAC packet data unit by performing an HARQ.

When the HARQ unit 124 desires to receive an explicit HARQ result with respect to all the MAC packet data units, the HARQ unit 124 may transmit the MAC packet data unit without adding other information in the MAC packet data unit.

When the HARQ unit 124 requests the reception apparatus for an explicit HARQ result with respect to a particular MAC packet data unit, the HARQ unit 124 may set a status polling flag in the particular MAC packet data unit and transmit the particular MAC packet data unit with the set status polling flag. Here, the status polling flag may be STATUS POLL. Bit.

When the HARQ unit 124 requests the reception apparatus to accumulate an HARQ result, the HARQ unit 124 may manage sequence numbers and sequentially include the sequence numbers in all the MAC packet data and transmit the MAC packet data units.

When the HARQ unit 124 requests the reception apparatus for the accumulated HARQ results, the HARQ unit 124 may set the status polling flag at a requested point in time of the accumulated HARQ results. The HARQ unit 124 may include, in a corresponding MAC packet data unit, the status polling flag and a sequence number corresponding to the requested point in time to thereby transmit the MAC packet data unit. Here, the status polling flag and the sequence number may be included in a sub header, or may be included in an MAC control element.

The HARQ unit 124 may verify whether HARQ feedback information is included in the received MAC packet data unit, and may verify whether the HARQ feedback information is NACK. When the HARQ feedback information is NACK, the HARQ unit 124 may retransmit the MAC packet data unit.

The HARQ unit 124 may receive a radio link status of the reception apparatus receiving the MAC packet data unit, adjust a maximum number of HARQ transmissions based on the radio link status of the reception apparatus, and transmit the adjusted maximum number of HARQ transmissions to the reception apparatus.

In this instance, when the radio link status of the reception apparatus is good, the HARQ unit 124 may decrease the maximum number of HARQ transmissions. Conversely, when the radio link status of the reception apparatus is poor, the HARQ unit 124 may increase the maximum number of HARQ transmissions. Also, the HARQ unit 124 may transmit the adjusted maximum number of HARQ transmissions to the reception apparatus using the MAC control element or a Reconfiguration Request Radio Resource Control (RRC) message.

According to an embodiment of the present invention, the packet data transmission apparatus using two sublayers may process an ARQ using the ARQ unit 114 of the PDCP layer 110, or may process an HARQ using the HARQ unit 124 of the MAC layer 120.

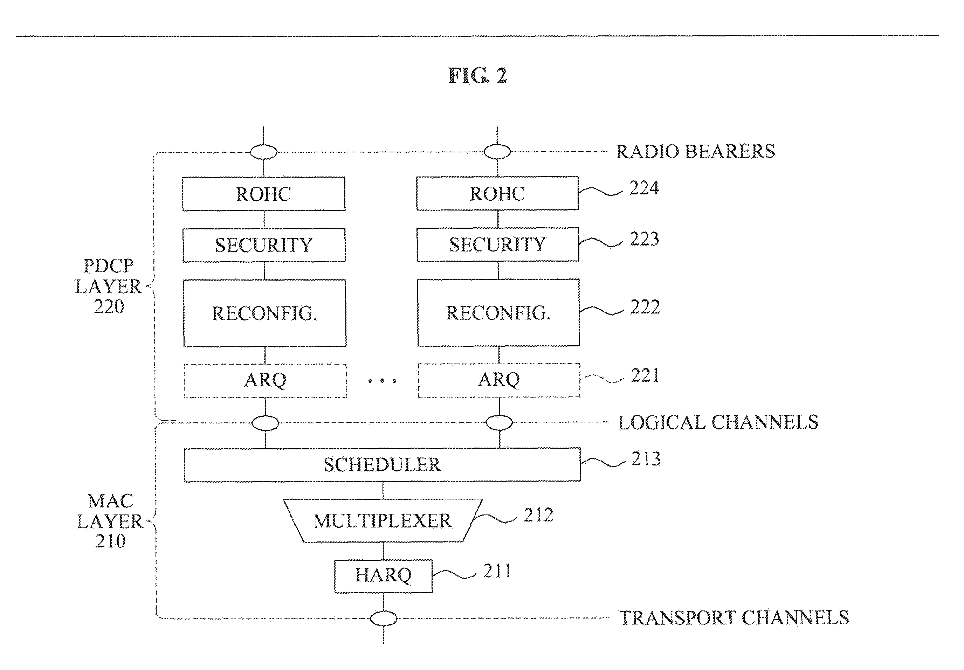

FIG. 2 is a diagram illustrating a configuration of an apparatus for terminal side using two sublayers according to an embodiment of the present invention.

Referring to FIG. 2, the packet data reception apparatus using the two sublayers according to an embodiment of the present invention may include an MAC layer 210 and a PDCP layer 220.

The MAC layer 210 may include an HARQ unit 211, a multiplexer 212, and a scheduler 213.

The HARQ unit 211 may transmit and receive an MAC packet data unit to and from a transmission apparatus by performing an HARQ.

When the MAC packet data unit is received from the transmission apparatus, the HARQ unit 211 may calculate an HARQ result by performing the HARQ for the MAC packet data unit, and include, in the MAC packet data unit, HARQ feedback information containing the HARQ result and thereby transmit the MAC packet data unlit

For example, when the HARQ unit 211 transmits an explicit HARQ result with respect to all the MAC packet data units transmitted from the transmission apparatus, the HARQ unit 211 may calculate the HARQ result by performing the HARQ with respect to all the MAC packet data units, and may include, in the MAC packet data unit, HARQ feedback information containing the HARQ result and HARQ identification (ID) information, and thereby transmit the MAC packet data unit to the transmission apparatus.

As another example, when the HARQ unit 211 transmits an explicit HARQ result with respect to a particular packet data unit among MAC packet data units transmitted from the transmission apparatus, the HARQ unit 211 may verify whether a status polling flag is set in a received MAC packet data. When the status polling flag is included in the received MAC packet data unit, the HARQ unit 211 may calculate the HARQ result by performing the HARQ, and may include, in the particular MAC packet data unit, HARQ feedback information containing the HARQ result and HARQ ID information, and thereby transmit the particular MAC packet data unit to the transmission apparatus.

As still another example, when the HARQ unit 211 accumulates the HARQ results and transmits the accumulated HARQ results, the HARQ unit 211 may calculate an HARQ result by performing the HARQ based on a sequence number included in a corresponding MAC packet data unit, and accumulate and store the HARQ result. When the HARQ unit 211 receives the MAC packet data unit with a set status polling flag, the HARQ unit 211 may include, in the MAC packet data unit, HARQ feedback information containing the stored HARQ result and HARQ ID information, and thereby transmit the MAC packet data unit to the transmission apparatus.

Also, the HARQ unit 211 may verify whether a sequence number is included in the received MAC packet data unit. When the sequence number is included, the HARQ unit 211 may determine to accumulate and transmit the HARQ result.

The HARQ unit 211 may include, in the MAC packet data unit, the entire HARQ result with respect to all the currently received MAC packet data units, and thereby transmit the MAC packet data unit.

Specifically, the HARQ unit 211 may set, as an ACK sequence number, a highest sequence number + 1 among sequence numbers included in the currently received MAC packet data units, and set an HARQ NACK sequence number as a NACK sequence number. Also, only a single ACK sequence number may be included in the MAC packet data unit. At least one NACK sequence number may or may not be included in the MAC packet data unit.

For example, in a case where MAC packet data units with sequence numbers 0 through 20 are transmitted, and MAC packet data unit with sequence numbers 4 and 10 are NACK, when an MAC packet data unit with a set status polling flag is received, the HARQ unit 211 may set "20 + 1 = 21" as the ACK sequence number, and set "4" and "10" as NACK sequence numbers. Also, the HARQ unit 211 may include, in the MAC packet data unit, the ACK sequence number 21 and the NACK sequence numbers 4 and 10 and thereby transmit the MAC packet data unit.

Here, the HARQ feedback information may be transmitted by STATUS REPORT MAC Control Element. For example, the HARQ unit 211 may reflect and set the HARQ result in the STATUS REPORT MAC Control Element, and include, in the MAC packet data unit, the STATUS REPORT MAC Control Element and the sequence number and thereby transmit the MAC packet data unit.

Also, the HARQ unit 211 may transmit a radio link status of the reception apparatus and may receive, from the transmission apparatus, a maximum number of HARQ transmissions that is adjusted based on the radio link status. Here, the HARQ unit 211 may control a number of HARQ transmissions based on the adjusted maximum number of HARQ transmissions.

The multiplexer 212 may de-multiplex, to the PDCP packet data unit, the MAC packet data unit received by the HARQ unit 211, and transmit the de-multiplexed PDCP packet data unit to the PDCP layer 220. Also, the multiplexer 212 may multiplex, to the MAC packet data unit, the PDCP packet data unit transmitted from an HARQ unit 221 or reconfiguration units 222 of the PDCP layer 220, and transmit the multiplexed MAC packet data unit to the HARQ unit 211.

The scheduler 213 may be connected to the ARQ units 221 or the reconfiguration units 222 of the PDCP layer 220 to perform scheduling for information transmission between the ARQ units 221 or the reconfiguration units 222 and the multiplexer 212. Also, the scheduler 213 may perform priority handling for the information transmission between the ARQ units 221 or the reconfiguration units 222 and the multiplexer 212.

The PDCP layer 220 may include the reconfiguration units 222, security units 223, and ROHC units 224.

The PDCP layer 220 may further include the ARQ units 221 between the reconfiguration units 222 and the scheduler 213.

When a PDCP sequence number is included in the PDCP packet data unit de-multiplexed in the MAC layer 210, the ARQ unit 221 may calculate an ARQ result by performing an ARQ based on the PDCP sequence number, and include the ARQ result in the PDCP packet data unit and thereby transmit the PDCP packet data unit to the MAC layer 210. The MAC layer 210 may multiplex, to the MAC packet data unit, the PDCP packet data unit containing the HARQ result, and transmit the multiplexed MAC packet data unit to the transmission apparatus.

Also, the ARQ unit 221 of the reception apparatus and the ARQ unit 114 of the transmission apparatus constitute a symmetrical structure. Therefore, when the ARQ unit 114 does not exist, the ARQ unit 221 may not operate.

The reconfiguration unit 222 may reconfigure the de-multiplexed PDCP packet data unit based on information contained therein. Here, the de-multiplexed PDCP packet may include information associated with a size of the PDCP packet data unit before it was reconfigured by the reconfiguration unit 113 of the transmission apparatus.

The security unit 223 may cancel a security process of the PDCP packet data unit. Specifically, the security unit 223 may decrypt the PDCP packet data unit.

The ROHC unit 224 may restore the IP packet and the header of the IP packet based on the PDCP packet data unit. Also, the ROHC unit 224 may compress the header of the IP packet provided from a user, and generate the PDCP packet data unit based on the IP packet.

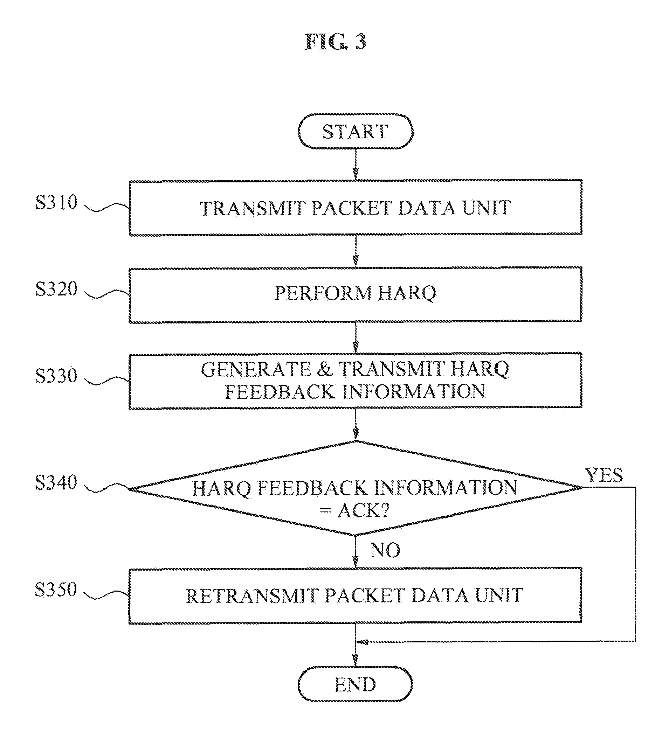

FIG. 3 is a flowchart illustrating a method of transmitting and receiving packet data using two sublayers according to an embodiment of the present invention.

FIG. 3 may illustrate an example of receiving an explicit HARQ result with respect to all the packet data units transmitted from a transmission apparatus.

In operation S310, the HARQ unit 124 of the transmission apparatus of FIG. 1 may transmit an MAC packet data unit without adding other information.

In operation S320, when the MAC packet data unit is received, the HARQ unit 211 of the reception apparatus of FIG. 2 may perform an HARQ to calculate an HARQ result.

In operation S330, the HARQ unit 211 of the reception apparatus may include, in the MAC packet data unit, HARQ feedback information containing the HARQ result and HARQ ID information, and thereby transmit the MAC packet data unit to the transmission apparatus. Here, the HARQ ID information may be an HARQ Process ID (PID).

Also, in operation S330, the HARQ unit 211 of the reception apparatus may initially transmit the HARQ feedback information to an L1 layer and subsequently transmit, to an L2 layer, the MAC packet data unit containing the HARQ feedback information.

In operation S340, the HARQ unit 124 of the transmission apparatus may receive the MAC packet data unit to determine whether the HARQ feedback information is ACK. When the MAC packet data unit is not received, or when the HARQ feedback information is not included in the MAC packet data unit, the HARQ feedback information may get lost in the middle and thus the HARQ unit 124 may determine the HARQ feedback information is NACK.

Here, when the HARQ feedback information transmitted to the L1 layer in operation S330 is different from the HARQ feedback information included in the MAC packet data unit, transmitted to the L2 layer, the HARQ unit 124 of the transmission apparatus may determine whether the HARQ feedback information is ACK based on the HARQ feedback information included in the MAC packet data unit, transmitted to the L2 layer.

In operation S350, the HARQ unit 124 of the transmission apparatus may retransmit the MAC packet data unit transmitted in operation S310.

When the HARQ feedback information transmitted to the L1 layer in operation S330 is NACK, the HARQ unit 124 of the transmission apparatus may perform operation S350 for the retransmission. When the HARQ feedback information transmitted to the L2 layer is ACK, the HARQ unit 124 of the transmission apparatus may stop the retransmission.

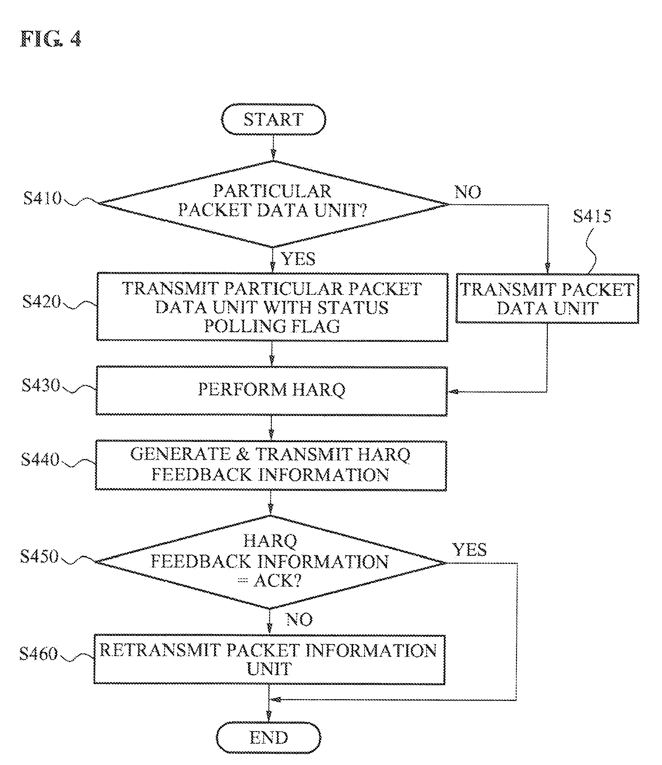

FIG. 4 is a flowchart illustrating a method of transmitting and receiving packet data using two sublayers according to another embodiment of the present invention with status polling mechanism.

FIG. 4 may illustrate an example of receiving an explicit HARQ result only with respect to a particular packet data unit.

In operation S410, the HARQ unit 124 of the transmission apparatus of FIG. 1 may verify whether an MAC packet data unit to be transmitted is the particular MAC packet data unit that needs setting of a status polling flag.

When the MAC packet data unit to be transmitted is not the particular MAC packet data unit, the HARQ unit 124 of the transmission apparatus may transmit the MAC packet data unit that is verified to not be the particular MAC packet data unit in operation S415.

Conversely, when the MAC packet data unit to be transmitted is the particular MAC packet data unit, the HARQ unit 124 of the transmission apparatus may set the status polling flag in the verified particular MAC packet data unit, include the status polling flag in the particular MAC packet data unit, and thereby transmit the particular MAC packet data unit. Here, the status polling flag may be included in an MAC sub header, or may be included in an MAC control element

In operation S430, when the HARQ unit 211 of the reception apparatus receives the particular MAC packet data unit, the HARQ unit 211 may perform an HARQ to calculate an HARQ result.

In operation S440, the HARQ unit 211 of the reception apparatus may include, in the particular MAC packet data unit, HARQ feedback information containing the HARQ result and HARQ ID information and thereby transmit the particular MAC packet data unit to the transmission apparatus. Here, the HARQ ID information may be an HARQ PID.

Also, in operation S440, the HARQ unit 211 of the reception apparatus may initially transmit the HARQ feedback information to an L1 layer and subsequently transmit, to an L2 layer, the MAC packet data unit containing the HARQ feedback information.

In operation S450, the HARQ unit 124 of the transmission apparatus may receive the MAC packet data unit to determine whether the HARQ feedback information is ACK.

Here, when the HARQ feedback information transmitted to the L1 layer in operation S440 is different from the HARQ feedback information included in the MAC packet data unit, transmitted to the L2 layer, the HARQ unit 124 of the transmission apparatus may determine whether the HARQ feedback information is ACK based on the HARQ feedback information included in the MAC packet data unit, transmitted to the L2 layer.

In operation S460, the HARQ unit 124 of the transmission apparatus may retransmit the particular MAC packet data unit transmitted in operation S420.

When the HARQ feedback information transmitted to the L1 layer in operation S440 is NACK, the HARQ unit 124 may perform operation S460 for the retransmission. When the HARQ feedback information transmitted to the L2 layer is ACK, the HARQ unit 124 of the transmission apparatus may stop the retransmission.

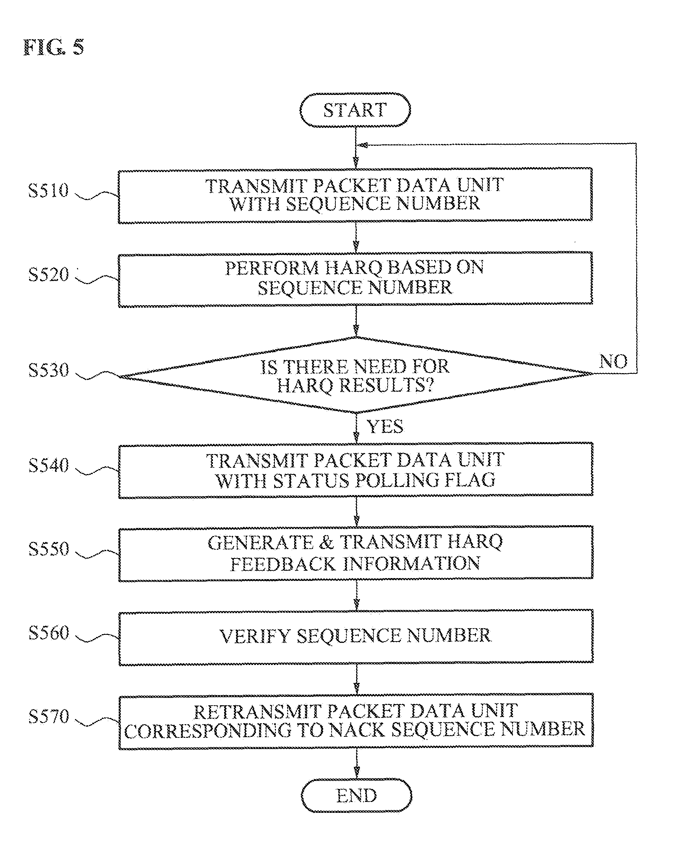

FIG. 5 is a flowchart illustrating a method of transmitting and receiving packet data using two sublayers according to still another embodiment of the present invention with accumulative status polling mechanism.

FIG. 5 may illustrate an example of accumulating and transmitting accumulated HARQ results.

In operation S510, the HARQ unit 124 of the transmission apparatus of FIG. 1 may set a sequence number for each MAC packet data unit, and transmit the MAC packet data unit with the set sequence number. Here, the sequence number may be included in an MAC sub header, or may also be included in an MAC control element.

In operation S520, when the MAC packet data unit is received, the HARQ unit 211 of the reception apparatus of FIG. 2 may perform an HARQ based on the sequence number to calculate an HARQ result.

In operation S530, the HARQ unit 124 of the transmission apparatus may verify whether there is a need for accumulated HARQ results.

When there is a need for the accumulated HARQ results, the HARQ unit 124 of the transmission apparatus may set a status polling flag in an MAC packet data unit to be transmitted at a requested point in time of the accumulated HARQ results, and may transmit the MAC packet data unit with the set status polling flag in operation S540.

In operation S550, the HARQ unit 211 of the reception apparatus may include, in the MAC packet data unit, the sequence number and HARQ feedback information storing the HARQ result and thereby transmit the MAC packet data unit.

The HARQ unit 211 of the reception apparatus may include, in the MAC packet data unit, the entire HARQ result with respect to all the currently received MAC packet data units, and thereby transmit the MAC packet data unit.

Specifically, the HARQ unit 211 of the reception apparatus may set, as an ACK sequence number, a highest sequence number + 1 among sequence numbers included in the currently received MAC packet data units, and set an HARQ NACK sequence number as a NACK sequence number. Also, only a single ACK sequence number may be included in the MAC packet data unit. At least one NACK sequence number may or may not be included in the MAC packet data unit.

For example, in a case where MAC packet data units with sequence numbers 1 through 20 are transmitted, and MAC packet data units with sequence numbers 4 and 10 are NACK, when an MAC packet data unit with a set status polling flag is received, the HARQ unit 211 may set "20 + 1 = 21" as the ACK sequence number, and set "4" and "10" as NACK sequence numbers. Also, the HARQ unit 211 may include, in the MAC packet data unit, the ACK sequence number 21 and the NACK sequence numbers 4 and 10 and thereby transmit the MAC packet data unit.

In operation S560, the HARQ unit 124 of the transmission apparatus may receive the MAC packet data unit transmitted in operation S550, and verify sequence numbers where the HARQ feedback information is ACK.

The HARQ unit 124 of the transmission apparatus may determine, as ACK, all the sequence numbers that are not included as the NACK sequence number in the MAC packet data unit transmitted in operation S550.

In operation S570, the HARQ unit 124 of the transmission apparatus may retransmit the MAC packet data unit corresponding to the sequence number that is transmitted as the NACK sequence number.

As described above, according to an embodiment of the present invention, there is provided an apparatus and method for transmitting packet data using two sublayers that may take over functions of RLC sublayers using a PDCP sublayer and an MAC sublayer to thereby reduce a number of sublayers to two sublayers, and may also reduce costs used for constituting a terminal and a base station.

Also, according to an embodiment of the present invention, it is possible to eliminate an HARQ ACK/NACK. error, and to guarantee a reliability even without using an ARQ by including HARQ ACK/NACK feedback information in an MAC packet data unit with, and by transmitting the MAC packet data unit.

Also, according to an embodiment of the present invention, it is possible to satisfy requirements for an HARQ performance in real time by changing a maximum number of HARQ transmissions based on a radio link state of a terminal.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. An apparatus for transmitting packet data using two sublayers, the apparatus comprising:
at least one Packet Data Convergence Protocol (PDCP) layer to compress a header of an Internee Protocol (IP) packet, to generate a PDCP packet data unit based on the IP packet, and to reconfigure the PDCP packet data unit to be a scheduled size; and
a Media Access Control (MAC) layer being connected to the at least one PDCP layer to multiplex the PDCP packet data unit to an MAC packet data unit, to de-multiplex the MAC packet data unit to the PDCP packet data unit, and to transmit and receive the MAC packet data unit by performing a Hybrid Automatic Repeat Request (HARQ).

2. The apparatus of claim 1, wherein each of the at least one PDC layer comprises:
a Robust Header Compression (ROHC) unit to compress the header of the IP packet, and to generate the PDCP packet data unit based on the IP packet;
a security unit to perform a security process so that information contained in the PDCP packet data unit is not exposed; and
a reconfiguration unit to reconfigure the PDCP packet data unit to be the scheduled size.

3. The apparatus of claim 1 or 2, wherein the MAC layer comprises:
a multiplexer corresponding to the at least one PDCP layer, and to multiplex, to the MAC packet data unit, the PDCP packet data unit transmitted from the at least one PDCP layer, and to transmit the multiplexed MAC packet data unit to an HARQ unit, or to de-multiplex, to the PDCP packet data unit, the MAC packet data received by the HARQ unit, and to transmit the de-multiplexed PDCP packet data unit to the at least one PDCP layer;
the HARQ unit to transmit and receive the MAC packet data unit by performing the HARQ, and to retransmit the MAC packet data unit corresponding to HARQ feedback information that is NACK, when the HARQ feedback information is contained in the received MAC packet data unit; and
a scheduler to perform scheduling for information transmission between the at least one PDCP layer and the multiplexer.

4. The apparatus of claim 3, wherein, when the HARQ unit receives an explicit HARQ result with respect to all the MAC packet data units, the HARQ unit transmits the MAC packet data unit without adding other information in the MAC packet data unit.

5. The apparatus of claim 3, wherein, when the HARQ unit requests a reception apparatus for an explicit HARQ result with respect to a particular MAC packet data unit, the HARQ unit sets a status polling flag in the particular MAC packet data unit and transmits the particular MAC packet data unit with the set status polling flag.

6. The apparatus of claim 3, wherein:
when the HARQ unit requests a reception apparatus to accumulate an HARQ result, the HARQ unit manages sequence numbers, sequentially includes the sequence numbers in all the MAC packet data units, and transmits all the MAC packet data units, and
when the HARQ unit requests the reception apparatus for the accumulated HARQ results, the HARQ unit sets a status polling flag at a requested point in time of the accumulated HARQ results, and includes, in a corresponding MAC packet data unit, the status polling flag and a sequence number corresponding to the requested point in time to thereby transmit the corresponding MAC packet data unit.

7. The apparatus of claim 3, wherein the HARQ unit receives a radio link status of a reception apparatus receiving the MAC packet data unit, adjusts a maximum number of HARQ transmissions based on the radio link status of the reception apparatus, and transmits the adjusted maximum number of HARQ transmissions to the reception apparatus.

8. An apparatus for receiving packet data using two sublayers, the apparatus comprising:
an MAC layer to transmit and receive an MAC packet data unit to and from a transmission apparatus by performing an HARQ, to de-multiplex the MAC packet data unit to a PDCP packet data unit, and to multiplex the PDCP packet data unit to the MAC packet data unit; and
a PDCP layer to reconfigure the PDCP packet data unit based on information included in the PDCP packet data unit, and to restore an IP packet and a header of the IP packet based on the reconfigure PDCP packet data unit.

9. The apparatus of claim 8, wherein the MAC layer comprises:
an HARQ unit to transmit and receive the MAC packet data unit to and from the transmission apparatus by performing the HARQ, to calculate an HARQ result by performing the HARQ for the MAC packet data unit when the MAC packet data unit is received from the transmission apparatus, and to include, in the MAC packet data unit, HARQ feedback information containing the HARQ result and thereby transmit the MAC packet data unit;
a multiplexer to de-multiplex, to the PDCP packet data unit, the MAC packet data unit received by the HARQ unit, and to transmit the de-multiplexed PDCP packet data unit to the PDCP layer, or to multiplex, to the MAC packet data unit, the PDCP packet data unit transmitted from the PDCP layer, and to transmit the multiplexed MAC packet data unit to the HARQ unit; and
a scheduler to perform scheduling for information transmission between the PDCP layer and the multiplexer.

10. The apparatus of claim 8 or 9, wherein the PDCP layer comprises:
a reconfiguration unit to reconfigure the de-multiplexed PDCP packet data unit based on information included in the de-multiplexed PDCP packet data unit;
a security unit to cancel a security process of the PDCP packet data unit; and
a ROHC unit to restore the IP packet and the header of the IP packet based on the PDCP packet data unit.

11. The apparatus of claim 9, wherein, when the HARQ unit transmits an explicit HARQ result with respect to all the MAC packet data units transmitted from the transmission apparatus, the HARQ unit calculates the HARQ result by performing the HARQ with respect to all the MAC packet data units, and includes, in the MAC packet data unit, HARQ feedback information containing the HARQ result and HARQ identification (ID) information, and thereby transmits the MAC packet data unit to the transmission apparatus.

12. The apparatus of claim 9, wherein:
when the HARQ unit transmits an explicit HARQ result with respect to a particular packet data unit among MAC packet data units transmitted from the transmission apparatus, the HARQ unit verifies whether a status polling flag is set in a received MAC packet data, and
when the status polling flag is included in the received MAC packet data unit, the HARQ unit calculates the HARQ result by performing the HARQ, and includes, in the particular MAC packet data unit, HARQ feedback information containing the HARQ result and HARQ ID information, and transmits the particular MAC packet data unit to the transmission apparatus.

13. The apparatus of claim 9, wherein:
when the HARQ unit accumulates the HARQ result and transmits the accumulated HARQ results, the HARQ unit calculates the HARQ result by performing the HARQ based on a sequence number included in the MAC packet data unit, accumulates and stores the HARQ result, and
when the HARQ unit receives the MAC packet data unit with a set status polling flag, the HARQ unit includes, in the MAC packet data unit, HARQ feedback information containing the stored HARQ result and HARQ ID information, and thereby transmits the MAC packet data unit to the transmission apparatus.

14. The apparatus of claim 13, wherein the HARQ unit sets a highest sequence number + 1 as an ACK sequence number at a point in time when the MAC packet data unit with the status polling flag is received, and sets an HARQ NACK sequence number as a NACK sequence number.

15. The apparatus of claim 9, wherein the HARQ unit transmits a radio link status of the reception apparatus, receives, from the transmission apparatus, a maximum number of HARQ transmissions adjusted based on the radio link status, and controls a number of HARQ transmissions based on the adjusted maximum number of HARQ transmissions.
